# EUROPEAN PATENT APPLICATION

(11) **EP 4 428 963 A1**
(43) Date of publication of application: **11.09.2024**
(21) Application number: 24160458.6
(22) Date of filing: 29.02.2024
(51) Int. Cl.: H01M 8/0662, H01M 8/04029, H01M 8/24

(54) **FUEL CELL SYSTEM AND FUEL CELL SYSTEM INSTALLATION SECTION**

(30) Priority: 10.03.2023 JP 2023037044
(71) Applicant: Yanmar Holdings Co., Ltd., Osaka-shi, Osaka (JP)
(72) Inventor: MARUYAMA, Takehiro, Osaka-shi (JP); MATSUI, Shinichiro, Osaka-shi (JP); HIRAIWA, Takuya, Osaka-shi (JP); SHINAGAWA, Manabu, Osaka-shi (JP); YUKIZANE, Fumiaki, Osaka-shi (JP); TERAGUCHI, Naoki, Osaka-shi (JP); KUBO, Takahiro, Osaka-shi (JP); UTANI, Takunori, Osaka-shi (JP); MARUTANI, Yusuke, Osaka-shi (JP); NAEKI, Shinya, Osaka-shi (JP)
(74) Representative: Dennemeyer & Associates S.A.

(57) **Abstract**

[Problem] To provide a technique capable of reducing the possibility of occurrence of an adverse effect due to salt damage in a fuel cell system.

[Solution] An exemplary fuel cell system includes a fuel cell module, an air intake unit that takes air into the fuel cell module, and a housing that houses the fuel cell module and the air intake unit. The housing includes a first outer surface wall on which a desalination device is disposed upstream of the air intake unit, and a second outer surface wall provided with an electric wire arrangement part in which an electric wire is arranged.

## Description

### TECHNICAL FIELD

The present invention relates to a fuel cell system and an installation section thereof.

### BACKGROUND ART

Conventionally, a configuration is known in which a desalination filter is attached to an opening formed in a housing container that houses a fuel cell system (see, for example, Patent Document 1). In Patent Document 1, the air that has passed through the desalination filter is sent to a fuel cell stack through a dedicated pipe.

### PRIOR ART DOCUMENT

### PATENT DOCUMENT

Patent Document 1: Japanese Unexamined Patent Application Publication No. 2022-26769

### SUMMARY OF INVENTION

### TECHNICAL PROBLEM

The fuel cell system may be mounted on a ship. Further, the fuel cell system may be used on the coast of the sea. In these cases, it is particularly important to deal with salt damage, and a technique for suppressing the influence of salt damage is required. In addition, in the fuel cell system, for example, due to a layout or the like, a dedicated pipe connecting the desalination filter to the fuel cell stack may not be installed. In this case, a configuration is employed in which an air intake port is provided inside the housing, and it is considered that a salt damage countermeasure different from a conventional configuration is required.

An object of the present invention is to provide a technique capable of reducing the possibility of occurrence of an adverse effect due to salt damage in a fuel cell system.

### SOLUTION TO PROBLEM

An exemplary fuel cell system of the present invention includes a fuel cell module, an air intake unit that takes air into the fuel cell module, and a housing that houses the fuel cell module and the air intake unit. The housing includes a first outer surface wall on which a desalination device is disposed upstream of the air intake unit, and a second outer surface wall provided with an electric wire arrangement part in which an electric wire is arranged.

### ADVANTAGEOUS EFFECTS OF INVENTION

According to an exemplary present invention, it is possible to reduce the possibility of occurrence of an adverse effect due to salt damage in a fuel cell system.

### BRIEF DESCRIPTION OF DRAWINGS

FIG. 1 is a schematic perspective view illustrating an appearance of a fuel cell system.
FIG. 2 is a schematic diagram illustrating an internal configuration of the fuel cell system.
FIG. 3 is a diagram for explaining a structure of a partition wall provided inside a housing.
FIG. 4A is for explaining another example of a through hole and a seal structure provided in the partition wall.
FIG. 4B is for explaining another example of the through hole and the seal structure provided in the partition wall.
FIG. 5 is a schematic diagram for explaining a variation of a vent passage.
FIG. 6 is a diagram illustrating a schematic configuration around a hydrogen-supplying connection part.
FIG. 7 is a schematic diagram illustrating a configuration example of a hydrogen flow passage disposed in a first section.
FIG. 8A is a diagram for explaining a cover member of a variation.
FIG. 8B is a diagram for explaining the cover member of the variation.
FIG. 9 is a schematic diagram illustrating a relation between a fuel cell module and an exhaust passage.
FIG. 10 is a schematic horizontal cross-sectional view of the fuel cell system taken along line A-A illustrated in FIG. 1.
FIG. 11 is a front view illustrating a schematic configuration of a right end side of a second section.
FIG. 12 is a view illustrating a state where a part of a detachable wall is detached from the fuel cell system illustrated in FIG. 1.
FIG. 13 is a perspective view illustrating a schematic configuration of a fuel cell system installation section.

### DESCRIPTION OF EMBODIMENTS

An embodiment of the present invention is described with reference to the drawings. In the drawings, the same reference numerals are given to the same or equivalent parts, and the description will not be repeated unless it is particularly necessary.

### < 1. Overview of Fuel Cell System >

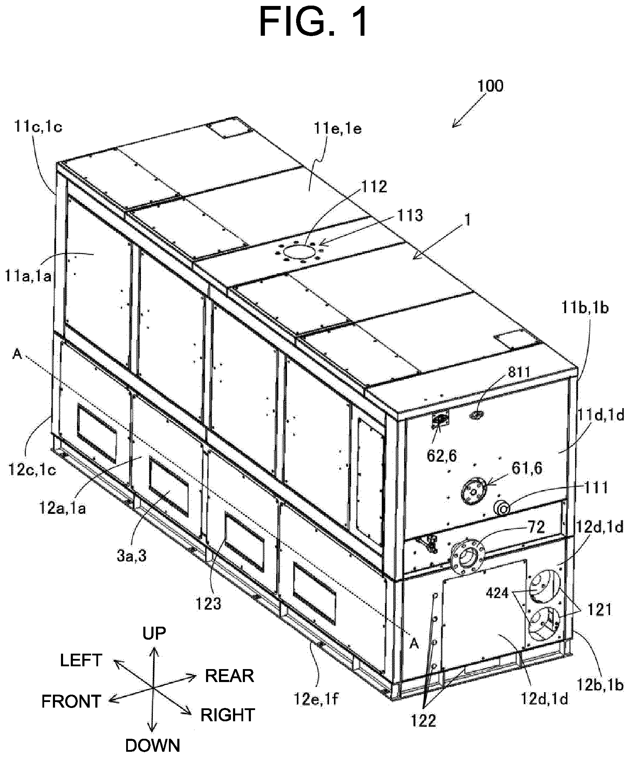

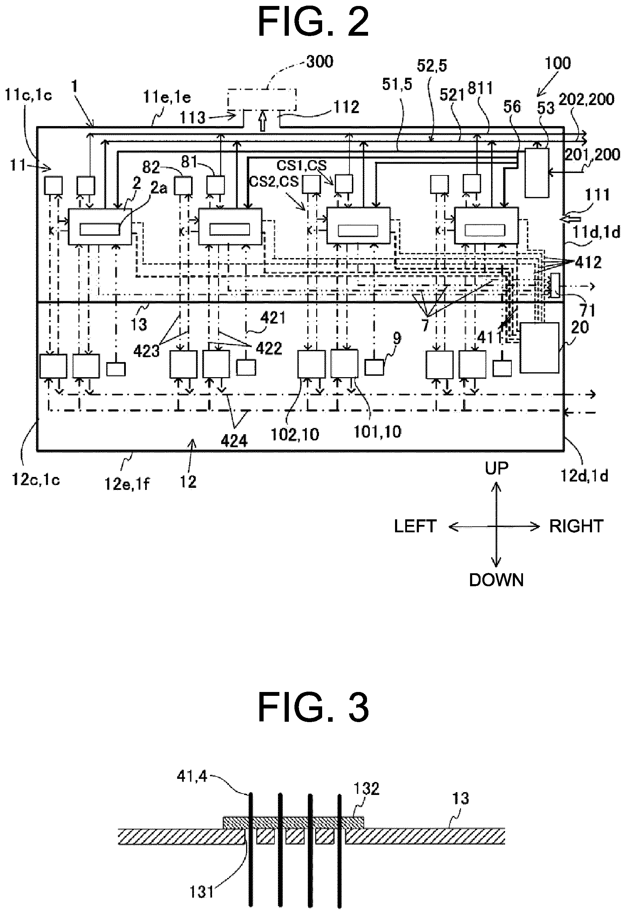

FIG. 1 is a schematic perspective view illustrating an appearance of a fuel cell system 100 according to an embodiment of the present invention. FIG. 2 is a schematic diagram illustrating an internal configuration of the fuel cell system 100 according to the embodiment of the present invention. In FIG. 2, arrows of a solid line, a one-dot chain line, and a two-dot chain line indicate a fluid passage (pipe in a detailed example) and a direction in which a fluid flows through a fluid passage. In FIG. 2, a broken line indicates a wire. First, an overview of the fuel cell system 100 will be described with reference to FIGs. 1 and 2.

As illustrated in FIG. 1, the fuel cell system 100 includes a housing 1. As illustrated in FIG. 2, the housing 1 houses a fuel cell module 2. In other words, the fuel cell system 100 includes the fuel cell module 2. Specifically, the number of the fuel cell modules 2 accommodated in the housing 1 is four. However, the number of the fuel cell modules 2 accommodated in the housing 1 may be singular or a plurality other than four.

The fuel cell module 2 includes a fuel cell stack 2a. Further, the fuel cell module 2 is configured to include a boost converter, a compressor for supplying air, and a pump for circulating a coolant (all of which are not illustrated). The fuel cell stack 2a is configured with a plurality of stacked cells. Each cell includes a solid polymer electrolyte membrane, an anode electrode, a cathode electrode, and a pair of separators. The solid polymer electrolyte membrane is sandwiched between the anode electrode and the cathode electrode. The anode electrode is a negative electrode (fuel electrode). The anode electrode includes an anode catalyst layer and a gas diffusion layer. The cathode electrode is a positive electrode (air electrode). The cathode electrode includes a cathode catalyst layer and a gas diffusion layer. The anode electrode, the solid polymer electrolyte membrane, and the cathode electrode constitute a membrane electrode assembly (MEA). The pair of separators sandwich the membrane electrode assembly. Each separator has a plurality of grooves. Each groove of one separator forms a flow passage of hydrogen gas. Each groove of the other separator forms a flow passage of oxidant gas.

On the anode side, hydrogen is catalytically split into hydrogen ions and electrons. The hydrogen ions pass through the solid polymer electrolyte membrane and move to the cathode side. Meanwhile, the electrons move to the cathode side through an external circuit. As a result, a current is generated (electric power is generated). On the cathode electrode side, oxygen contained in the oxidant gas combines with the electrons that have flowed through the external circuit and the hydrogen ions that have passed through the solid polymer electrolyte membrane to produce water. The generated water is included in the exhaust gas and discharged to the outside of the fuel cell system 100. The electric power generated by the fuel cell stack is boosted by the boost converter and extracted to the outside of the fuel cell system 100.

In the fuel cell system 100, measures against hydrogen leakage are appropriately taken from the perspective of safety. Further, even if hydrogen leaks, the fuel cell system 100 can safely process the leaked hydrogen. Furthermore, as illustrated in FIG. 1, the fuel cell system 100 includes a desalination device 3. The fuel cell system 100 is configured to be able to suppress salt damage by devising the disposition relating to the desalination device 3. The fuel cell system 100 is not particularly limited, but is suitable for use in a ship, for example.

The housing 1 of the fuel cell system 100 has, for example, a rectangular parallelepiped shape. In the following description of the fuel cell system 100, directions are defined as follows. A direction orthogonal to a horizontal floor surface on which the fuel cell system 100 is disposed is defined as an up-down direction, and a side on which the fuel cell system 100 is disposed with respect to the floor surface is defined as an upper side. In addition, front and rear are defined such that a side of the housing 1 on which the desalination device 3 is disposed is a front side and a side opposite to the front side of the housing 1 is a rear side. Left and right are defined such that the left-right direction is a direction orthogonal to the up-down direction and the front-rear direction, and that the left side when looking from the front to the rear is the left and the right side when looking from the front to the rear is the right. In a plan view of the housing 1 from above, the longitudinal direction of the housing 1 is the left-right direction, and the lateral direction is the front-rear direction. These directions are merely used for the purpose of illustration, and are not intended to limit the actual positional relation or directions.

### < 2. Detailed Configuration of Fuel Cell System >

### [2-1. Sections]

As illustrated in FIG. 2, the housing 1 includes a first section 11 and a second section 12. The second section 12 is adjacent to the first section 11. Specifically, the first section 11 and the second section 12 are arranged vertically. The first section 11 is disposed above the second section 12. The configuration in which the first section 11 and the second section 12 are arranged in the vertical direction is an example, and another configuration may be employed. For example, the first section and the second section may be arranged side by side. The fuel cell module 2 is disposed in the first section 11. An auxiliary machine relating to the operation of the fuel cell module 2 is disposed in the second section 12.

The auxiliary machine will be described below.

The partition wall 13 sections the first section 11 and the second section 12. The partition wall 13 constitutes a bottom wall of the first section 11. Further, the partition wall 13 constitutes an upper wall of the second section 12.

In addition to the partition wall 13, the first section 11 includes a first section front wall 11a, a first section rear wall 11b, a first section left wall 11c, a first section right wall 11d, and a first section upper wall 11e. The first section front wall 11a constitutes an upper portion of a front surface wall 1a of the housing 1. The first section rear wall 11b constitutes an upper portion of a rear surface wall 1b of the housing 1. The first section left wall 11c constitutes an upper portion of a left surface wall 1c of the housing 1. The first section right wall 11d constitutes an upper portion of a right surface wall 1d of the housing 1. The first section upper wall 11e constitutes an upper surface wall 1e of the housing 1.

Further, in addition to the partition wall 13, the second section 12 includes a second section front wall 12a, a second section rear wall 12b, a second section left wall 12c, a second section right wall 12d, and a second section bottom wall 12e. The second section front wall 12a constitutes a lower portion of the front surface wall 1a of the housing 1. The second section rear wall 12b constitutes a lower portion of the rear surface wall 1b of the housing 1. The second section left wall 12c constitutes a lower portion of the left surface wall 1c of the housing 1. The second section right wall 12d constitutes a lower portion of the right surface wall 1d of the housing 1. The second section bottom wall 12e constitutes a bottom surface wall 1f of the housing 1.

Specifically, the partition wall 13 airtightly sections the first section 11 and the second section 12. In the present embodiment, as will be described in detail below, the first section 11 is a section from which hydrogen may leak. However, since the partition wall 13 for airtightly sectioning the two sections 11 and 12 is provided, even if hydrogen leaks from the first section 11, hydrogen can be prevented from flowing into the second section 12. For this reason, it is possible to eliminate the need for devices disposed in the second section 12 to have an explosion-proof structure against hydrogen. Further, it is possible to eliminate the need to provide a function of ventilating hydrogen that has leaked into the second section 12.

FIG. 3 is a diagram for explaining a structure of the partition wall 13 provided inside the housing 1. As illustrated in FIG. 3, a part of the partition wall 13 has a through hole 131 penetrating in the up-down direction. The through hole 131 is provided to allow a member 4 such as a wire or a pipe to pass therethrough. That is, the fuel cell system 100 includes the member 4 which is disposed across the first section 11 and the second section 12 through the through hole 131 provided in the partition wall 13. The member 4 may include at least one of a wire and a pipe. In the present embodiment, the member 4 includes a wire and a pipe. In the example illustrated in FIG. 3, the member 4 is a wire 41. In the partition wall 13, one through hole 131 is provided for each of the plurality of wires 41. However, this is merely an example, and one through hole 131 may be configured to collectively pass the plurality of wires 41. The wires 41 include a power line and a signal line. The signal line includes a control line and a sensor line.

As illustrated in FIG. 3, the partition wall 13 is provided with a seal structure 132 that closes a gap between the through hole 131 and the member 4. Airtightness is secured by the seal structure 132, and even if hydrogen leaks in the first section 11, hydrogen can be prevented from flowing into the second section 12. The seal structure 132 may be configured using, for example, a sealing material such as a silicone-based caulking agent. FIG. 3 illustrates a configuration for securing airtightness by using a sealing material. As another example, the seal structure 132 may be configured using a cable gland.

Even in a case where the member 4 disposed across the first section 11 and the second section 12 is a pipe, the same seal structure as in the case of the wire 41 may be applied.

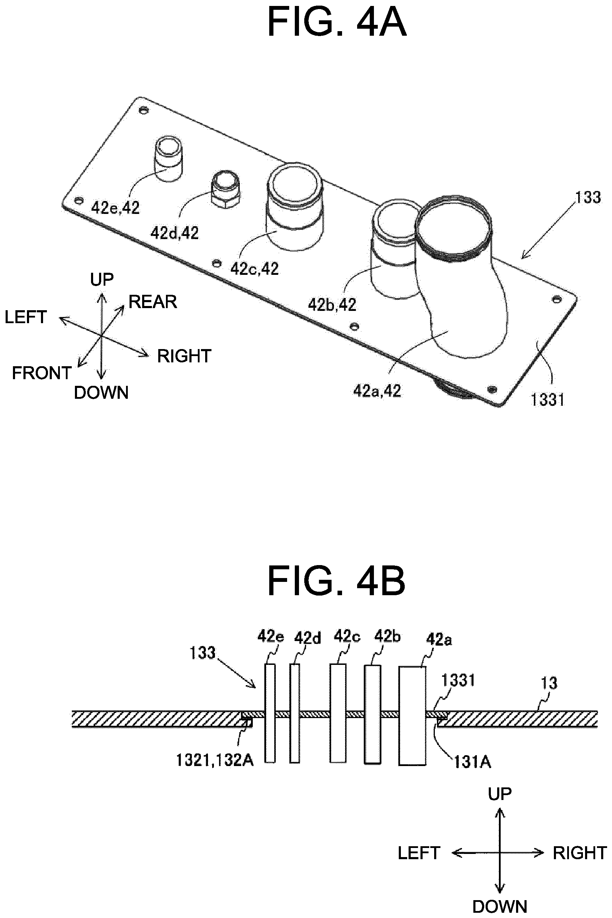

FIGs. 4A and 4B are diagrams for explaining another example of the through hole and the seal structure provided in the partition wall 13. In the fuel cell system 100 according to the present embodiment, the pipes are configured as illustrated in FIGs. 4A and 4B.

FIG. 4A is an adapter 133 for disposing a plurality of pipes 42 across the first section 11 and the second section 12. The adapter 133 includes a plate-shaped member 1331 integrated with the plurality of pipes 42. The plate-shaped member 1331 and the plurality of pipes 42 constitute a single member, and there is no gap between the plate-shaped member 1331 and each of the pipes 42. That is, the adapter 133 is configured to include a seal structure.

Five pipes 42 are attached to the adapter 133. The five pipes 42 are arranged in the left-right direction. A rightmost pipe 42a is a pipe through which air flows. Second and third pipes 42b and 42c from the right are pipes through which a coolant (first coolant) for the fuel cell stack 2a included in the fuel cell module 2 flows. Fourth and fifth pipes 42d and 42e from the right are pipes through which a coolant (second coolant) for power electronic devices including a boost converter included in the fuel cell module 2 flows.

FIG. 4B illustrates a structure for attaching the adapter 133 illustrated in FIG. 4A to the partition wall 13. As illustrated in FIG. 4B, the adapter 133 is disposed so as to close one through hole 131A provided in the partition wall 13. Thus, the plurality of pipes 42 are disposed across the first section 11 and the second section 12 through the through hole 131A. A seal member 1321 constituting a seal structure 132A is disposed between the adapter 133 and the partition wall 13. Further, as described above, the adapter 133 itself is configured to include the seal structure. Therefore, it is possible to prevent hydrogen from flowing into the second section 12 from the first section 11.

In the first section 11 and the second section 12, corresponding pipes are coupled to both end portions in the up-down direction of each pipe 42 included in the adapter 133 in a sealed state.

### [2-2. First Section]

As illustrated in FIG. 2, a hydrogen flow passage 5 (thick solid line) is disposed in the first section 11. In other words, the fuel cell system 100 includes the hydrogen flow passage 5 disposed in the housing 1. Specifically, the hydrogen flow passage 5 includes a hydrogen supply passage 51 that supplies hydrogen to the fuel cell module 2. Further, the hydrogen flow passage 5 includes a vent passage 52 that discharges hydrogen from the fuel cell module 2. The hydrogen flow passage 5 can be formed by coupling a plurality of pipes. There is a possibility that hydrogen leaks from a coupling part between the pipes. In consideration of this point, the first section 11 is provided with a hydrogen leakage countermeasure.

The housing 1 has a connection part 6 (see FIG. 1) between the hydrogen flow passage 5 and an external hydrogen flow passage 200 disposed outside the housing 1, on a wall different from the partition wall 13 among the walls 11a to 11e and 13 constituting the first section 11. The connection part 6 may be a connection portion itself for connecting the hydrogen flow passage 5 and the external hydrogen flow passage 200, or may be a means for implementing the connection between them. In the present embodiment, the connection part 6 is an opening for exposing or disposing the end portion of the hydrogen flow passage 5 disposed in the first section 11 to the outside of the housing 1. The hydrogen flow passage 5 and the external hydrogen flow passage 200 can be connected to each other by using the opening. Specifically, the connection is a connection between pipes.

In the present embodiment, the connection part 6 is provided on the first section right wall 11d. However, the connection part 6 may be provided on a wall constituting the first section 11 other than the partition wall 13, such as the first section left wall 11c. The connection part 6 is provided on a wall other than the partition wall 13 constituting the first section 11, and thus the hydrogen flow passage 5 can be configured not to be disposed in the second section 12. That is, in the second section 12, it is not necessary to take measures against hydrogen leakage. As a result, it is possible to easily take measures against hydrogen leakage in the fuel cell system 100.

Similarly to the hydrogen flow passage 5 disposed inside the housing 1, the external hydrogen flow passage 200 also includes an external hydrogen supply passage 201, which is a passage for supplying hydrogen, and an external vent passage 202, which is a passage for exhausting hydrogen. Correspondingly, the connection part 6 also has a hydrogen-supplying connection part 61 for connecting the hydrogen supply passage 51 and the external hydrogen supply passage 201, and a vent connection part 62 for connecting the vent passage 52 and the external vent passage 202 (see FIG. 1). In the present embodiment, the hydrogen-supplying connection part 61 and the vent connection part 62 are provided on the same wall (first section right wall 11d) constituting the first section 11. However, this is merely an example, and the hydrogen-supplying connection part 61 and the vent connection part 62 may be provided on different walls constituting the first section 11.

In the present embodiment, a plurality of fuel cell modules 2 are disposed in the first section 11. The plurality of fuel cell modules 2 are arranged side by side in the left-right direction. Specifically, the number of the fuel cell modules 2 disposed in the first section 11 is four. The hydrogen that has entered the hydrogen supply passage 51 in the housing 1 from the external hydrogen supply passage 201 reaches a branch part 56 that branches the hydrogen supply passage 51 into four, through a valve device 53. At the branch part 56, the hydrogen is distributed to four hydrogen supply passages 51 provided exclusively for the respective fuel cell modules 2. Then, the distributed hydrogen is supplied to the respective fuel cell modules 2.

As can be seen from the above description, the number of the hydrogen supply passages 51 in the first section 11 which are connected to the external hydrogen supply passage 201 by using the connection part 6 is one. That is, in the present embodiment, at the position where the connection part 6 is provided, the hydrogen supply passage 51 in the first section 11 is not provided for each of the plurality of fuel cell modules 2, but is shared among the plurality of fuel cell modules 2. By performing such sharing, the number of the connection parts 6 can be reduced. Further, since the number of the connection parts 6 is reduced, it is possible to improve the sealing property of the first section 11.

The valve device 53 includes a shutoff valve that shuts off the supply of hydrogen to the fuel cell module 2. Further, the valve device 53 includes a bleed valve that releases hydrogen to the vent passage 52 when the supply of hydrogen to the fuel cell module 2 is shut off. In the present embodiment, in the first section 11, the valve device 53 is disposed between a wall (first section right wall 11d) on which the connection part 6 is provided and the fuel cell module 2. Specifically, the valve device 53 is disposed between the first section right wall 11d and the fuel cell module 2 in the left-right direction. The valve device 53 is disposed at such a position, and therefore the connection part 6 can be disposed at a position away from the fuel cell module 2. Pipes through which hydrogen flows are connected to each other at the connection part 6 or in the vicinity thereof, and therefore the possibility of hydrogen leakage is likely to be higher than in other portions. In this regard, in the present embodiment, the connection part 6 is disposed at a position away from the fuel cell module 2, and therefore it is possible to reduce the possibility that the leaked hydrogen reaches the fuel cell module 2. That is, safety can be improved.

The vent passage 52 includes a shared vent passage 521 shared among the plurality of fuel cell modules 2. The hydrogen discharged from each fuel cell module 2 is sent to the shared vent passage 521. With this configuration, the number of the vent connection parts 62 connecting the vent passage 52 and the external vent passage 202 can be minimized. In the present embodiment, the shared vent passage 521 is provided, and therefore the number of the vent connection parts 62 is one. The vent connection part 62 is an opening for exposing or disposing the end portion of the shared vent passage 52 to the outside of the housing 1. It should be noted that the configuration described above is merely a preferred configuration, and a configuration may be employed in which a separate vent passage is provided for each fuel cell module 2, and the gas is separately discharged to the outside of the housing 1.

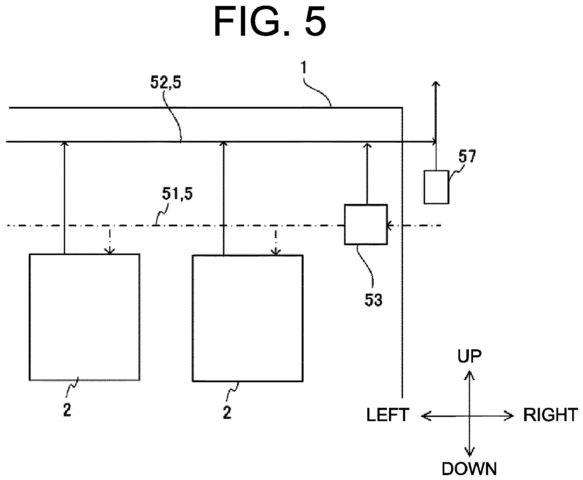

FIG. 5 is a schematic diagram for explaining a variation of the vent passage 52. As illustrated in FIG. 5, the fuel cell system 100 may include a drain part 57 connected to the vent passage 52. Specifically, the drain part 57 includes a drain passage connected to the vent passage 52, and a drain valve that discharges drain water. By providing the drain part 57, the condensed water generated in the vent passage 52 can be prevented from flowing back to the fuel cell stack 2a of the fuel cell module 2. As a result, the occurrence of a failure in the fuel cell system 100 can be reduced.

In the example illustrated in FIG. 5, the drain part 57 is provided outside the housing 1. However, the drain part 57 may be provided inside the housing 1. Further, the number of the drain part 57 connected to the vent passage 52 may be one or more. The drain part 57 may be provided not only at the end portion of the vent passage 52 but also at the intermediate portion of the vent passage 52.

As described above, the hydrogen flow passage 5 configured by coupling a plurality of pipes is disposed in the first section 11, and thus there is a possibility that hydrogen leaks. For this reason, the first section 11 is provided with a configuration that enables ventilation as a countermeasure against hydrogen leakage. The first section 11 is provided with an intake port 111 and an exhaust port 112 for ventilation (see FIGs. 1 and 2). The ventilation may be interpreted as a term indicating replacement of air, but may be interpreted as a term indicating replacement of inert gas such as nitrogen gas or argon gas. In this connection, it may be provided that the first section 11 can be filled with an inert gas. With such a configuration, when hydrogen leaks from the first section 11, the possibility that the leaked hydrogen reacts with oxygen in the first section 11 can be reduced.

The intake port 111 may be provided in at least one of the walls 11a to 11e and 13 constituting the first section 11 except for the partition wall 13. In the present embodiment, the intake port 111 is provided on the first section right wall 11d. The intake port 111 provided in the first section right wall 11d is a through hole penetrating the wall in the left-right direction. A ventilation fluid (for example, air, nitrogen gas, argon gas, or the like) is supplied into the first section 11 from the intake port 111. A pipe for supplying the ventilation fluid is attached to the intake port 111.

In the present embodiment, the opening constituting the connection part 6 has a function as an inlet of the ventilation fluid. That is, the opening constituting the connection part 6 has a function as an intake port. A configuration relating to this will be described by taking a case where the connection part 6 is the hydrogen-supplying connection part 61 as an example. Although not described, the same configuration may be employed in a case where the connection part 6 is the vent connection part 62.

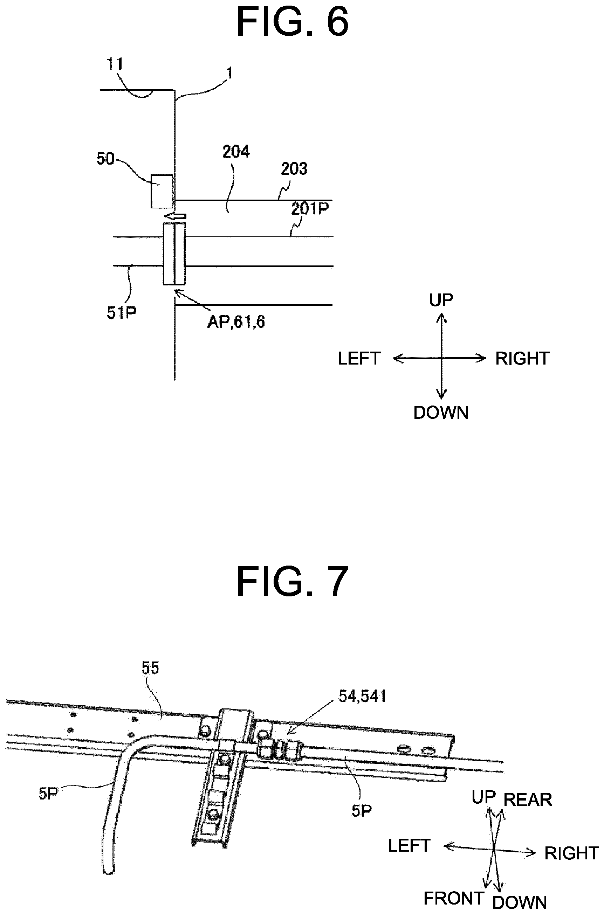

FIG. 6 is a diagram illustrating a schematic configuration around the hydrogen-supplying connection part 61 included in the fuel cell system 100 according to the embodiment of the present invention. The hydrogen-supplying connection part 61 is an opening AP, and a pipe 51P constituting the hydrogen supply passage 51 and a pipe 201P constituting the external hydrogen supply passage 201 are connected to each other with the use of the opening AP. In a state where the two pipes 51P and 201P are connected to each other, the opening AP constituting the hydrogen-supplying connection part 61 is not entirely closed, and the inside of the first section 11 communicates with the outside of the housing 1 through the opening AP.

Around the pipe 201P constituting the external hydrogen supply passage 201, an outer pipe 203 is disposed to surround the pipe 201P. In other words, the pipe 201P constituting the external hydrogen supply passage 201 is disposed inside the outer pipe 203. In the following description of FIG. 6, the pipe 201P constituting the external hydrogen supply passage 201 will be referred to as an inner pipe 201P.

The housing 1 is provided so that the outer pipe 203 surrounding an outer periphery of the inner pipe 201P constituting the external hydrogen flow passage 200 (for example, the external hydrogen supply passage 201) can be attached thereto. The outer pipe 203 is attached to the housing 1 by using, for example, a screw. The outer pipe 203 surrounds the opening AP constituting the hydrogen-supplying connection part 61. The inner diameter of the outer pipe 203 is larger than the diameter of the opening AP. An internal space 204 formed between the inner pipe 201P and the outer pipe 203 communicates with the inside of the first section 11 through the opening AP. The ventilation fluid can flow through the internal space 204. That is, the first section 11 is provided so as to be able to supply the ventilation fluid via the internal space 204 between the inner pipe 201P and the outer pipe 203.

The ventilation fluid can be supplied into the first section 11 by using the internal space 204, and therefore the size of the intake port 111 described above can be reduced. In some cases, the intake port 111 may not be provided. Further, even when hydrogen leaks from the inner pipe 201P, the leaked hydrogen can be sent from the internal space 204 into the first section 11 together with the ventilation fluid, and can be safely discharged to the outside. The discharge of ventilation fluid from the first section 11 will be described below.

As illustrated in FIG. 6, a hydrogen concentration detection device 50 is preferably disposed in the vicinity of the connection part 6 in the first section 11. The vicinity of the connection part 6 is specifically a hydrogen leakage detection range. With such a configuration, it is possible to quickly detect the hydrogen leakage from the connection portion between the two pipes 51P and 201P or the inner pipe 201P. The operation of the fuel cell system 100 can be promptly stopped by promptly detecting the hydrogen leakage.

The first section 11 has a ventilation device that ventilates the inside of the section or a ventilation device connection part connected to the ventilation device. In the present embodiment, as illustrated in FIGs. 1 and 2, the first section 11 has a ventilation device connection part 113 connected to a ventilation device 300. The ventilation device connection part 113 includes an exhaust port 112. The ventilation device 300 is disposed on the downstream side of the flow of the ventilation fluid with respect to the exhaust port 112. The ventilation device 300 discharges the ventilation fluid to an area excluding the second section 12. When the ventilation device 300 is driven, the fluid in the first section 11 is discharged to the outside of the first section 11 through the exhaust port 112. Even when hydrogen leaks in the first section 11, the hydrogen can be discharged to the outside of the housing 1 together with the ventilation fluid in such manner that the hydrogen does not leak into the second section 12.

Specifically, the exhaust port 112 is provided in the first section upper wall 11e (upper surface wall 1e of the housing 1). That is, the ventilation device connection part 113 is provided on the first section upper wall 11e which is the upper wall of the first section 11. Even when hydrogen leaks, it is only necessary to guide the hydrogen above the fuel cell module 2, making it easier to discharge hydrogen.

In a case where the first section 11 is configured to include the ventilation device 300, the ventilation device 300 may be disposed on the downstream side of the flow of the ventilation fluid with respect to the exhaust port 112. Also in this case, the ventilation device 300 is preferably provided on the first section upper wall 11e, which is the upper wall of the first section 11.

In the first section 11, measures are taken to facilitate discharge of the leaked hydrogen from the exhaust port 112. FIG. 7 is a schematic diagram illustrating a configuration example of the hydrogen flow passage 5 disposed in the first section 11. As illustrated in FIG. 7, a pipe coupling part 54 is provided in the first section 11 to couple the pipes 5P constituting the hydrogen flow passage 5.

In the present embodiment, the pipe coupling part 54 includes an upper pipe coupling part 541 disposed above the fuel cell module 2. Although there is a possibility that hydrogen leaks from the pipe coupling part 54, the upper pipe coupling part 541 can prevent the leaked hydrogen from flowing toward the fuel cell module 2. That is, safety can be improved.

In a case where a plurality of pipe coupling parts 54 are provided in the fuel cell system 100, all of the pipe coupling parts 54 are preferably the upper pipe coupling parts 541. However, at least some of the plurality of pipe coupling parts 54 may not be the upper pipe coupling part 541.

The fuel cell system 100 includes a cover member that covers at least a part of the pipe coupling part 54. With the configuration in which the cover member is provided, in a case where hydrogen having high diffusibility leaks from the pipe coupling part 54, diffusion of hydrogen in the first section 11 can be suppressed. In the example illustrated in FIG. 7, a plate-shaped member 55 disposed below the pipe coupling part 54 that couples the two pipes 5P extending in the left-right direction to each other corresponds to the cover member that covers a part of the pipe coupling part 54. The plate-shaped member 55 (cover member) disposed below the pipe coupling part 54 can prevent the leaked hydrogen from diffusing toward the fuel cell module 2, and can suppress the leaked hydrogen from remaining behind the components.

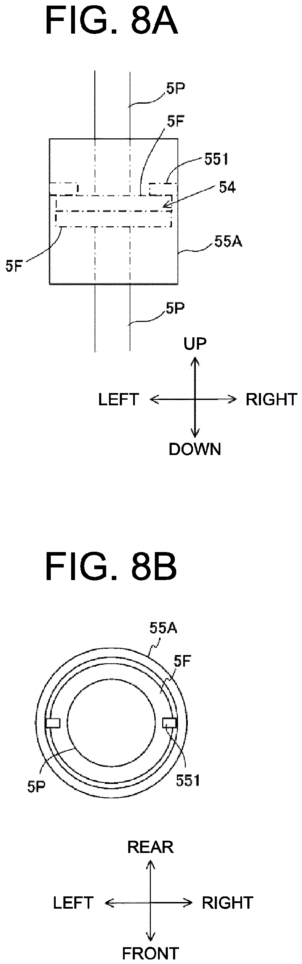

FIGs. 8A and 8B are diagrams for explaining a cover member 55A according to a variation. FIG. 8A is a side view, and a one-dot chain line indicates an internal structure. FIG. 8B is a top view. In the variation, the two pipes 5P to be coupled extend vertically. The pipe coupling part 54 includes a flange portion 5F provided at the lower end of the upper pipe 5P and a flange portion 5F provided at the upper end of the lower pipe 5P. The cover member 55A has a vertically extending tubular shape and is disposed around the pipe coupling part 54. The cover member 55A covers the entire periphery of the pipe coupling part 54. A plurality of claw portions 551 protruding inward are provided inside the cylindrical cover member 55A. The claw portions 551 are caught by the pipe coupling part 54, and the cover member 55A is supported by the pipe coupling part 54. Even in such a configuration, the diffusion of the leaked hydrogen can be prevented.

In addition, an exhaust passage 7 and a reserve tank 8 are disposed in the first section 11 (see FIG. 2). In FIG. 2, the exhaust passage 7 is indicated by a thin two-dot chain line.

The exhaust passage 7 is connected to the fuel cell module 2. Specifically, the exhaust passage 7 is an exhaust pipe. The exhaust passage 7 is used for circulation of exhaust gas of the fuel cell module 2. The exhaust gas includes, for example, water vapor generated during power generation, oxygen and nitrogen that have been supplied to the fuel cell module 2 but have not been used, and hydrogen that is purged and discharged from the anode path of the fuel cell stack 2a as appropriate. In the present embodiment, a separate exhaust passage 7 is connected to each of the four fuel cell modules 2 disposed in the first section 11. That is, four exhaust passages 7 are disposed in the first section 11. The four exhaust passages 7 are coupled to an exhaust passage collection part 71 disposed in the first section 11. The exhaust passage collection part 71 is disposed at a right end portion of the first section 11. The exhaust gas in the four exhaust passages 7 is collected in the exhaust passage collection part 71 and is discharged to the outside of the first section 11 through one terminal exhaust passage 72 (see FIG. 1). The exhaust passage collection part 71 may be provided outside the first section 11. Alternatively, the outlet of each exhaust passage 7 may be directly connected to an external exhaust passage outside the first section 11 without providing the exhaust passage collection part 71.

As illustrated in FIG. 1, the distal end (right end) of the terminal exhaust passage 72 protrudes outward from the first section right wall 11d. An external exhaust passage (not illustrated) is connected to the distal end of the terminal exhaust passage 72, and discharges exhaust gas in the fuel cell module 2 to an appropriate place.

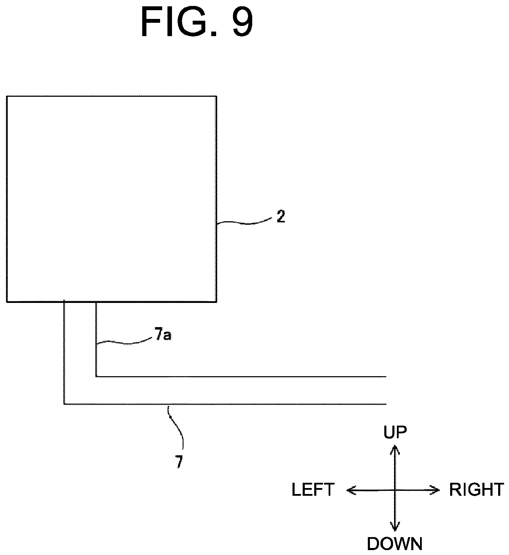

FIG. 9 is a schematic diagram illustrating a relation between the fuel cell module 2 and the exhaust passage 7. As illustrated in FIG. 9, the exhaust passage 7 includes a flow passage that guides the exhaust gas downward from the fuel cell module 2. The flow passage that guides the exhaust gas downward is obtained by forming a portion 7a extending downward in the exhaust passage 7. The portion 7a extending downward is not necessarily parallel to the up-down direction, and may be inclined with respect to the up-down direction. By providing the flow passage that guides the exhaust gas downward, the condensed water generated in the exhaust passage 7 can be prevented from flowing back to the fuel cell stack 2a. That is, the occurrence of a failure in the fuel cell system 100 can be suppressed.

The reserve tank 8 is included in a cooling system CS provided for the fuel cell module 2 (see FIG. 2). Specifically, the cooling system CS provided for the fuel cell module 2 includes a first cooling system CS1 and a second cooling system CS2. Therefore, in particular, the reserve tank 8 includes a first reserve tank 81 included in the first cooling system CS1 and a second reserve tank 82 included in the second cooling system CS2.

The first cooling system CS1 is a cooling system that cools the fuel cell stack 2a of in the fuel cell module 2. That is, the reserve tank 81 included in the cooling system CS1 that cools the fuel cell stack 2a of the fuel cell module 2 is disposed in the first section 11. The first cooling system CS1 circulates a first coolant that cools the fuel cell stack 2a by driving a pump (not illustrated) included in the fuel cell module 2. The pump described above may be disposed outside the fuel cell module 2. The first reserve tank 81 stores or discharges the first coolant as necessary.

The first reserve tank 81 is disposed above the fuel cell stack 2a. Therefore, even when the first coolant contains hydrogen due to a malfunction, the hydrogen can be released to a position higher than the fuel cell stack 2a. The first cooling system CS1 is provided for each of the fuel cell modules 2. To this end, in the present embodiment, four first reserve tanks 81 are disposed in the first section 11.

As illustrated in FIG. 2, each of the first reserve tanks 81 is connected to an air vent pipe 811 (thin solid line). Further, as illustrated in FIG. 1, an end portion of the air vent pipe 811 is exposed to the outside through an opening (not illustrated) in the first section right wall 11d. Even when hydrogen is contained in the first coolant due to a malfunction, the hydrogen can be discharged to the outside of the first section 11 through the air vent pipe 811.

The second cooling system CS2 is a cooling system that cools a power electronic device included in the fuel cell module 2. That is, the reserve tank 82 included in the cooling system CS2 that cools the power electronic device of the fuel cell module 2 is disposed in the first section 11. The second cooling system CS2 circulates a second coolant that cools the power electronic device by driving a pump (not illustrated) included in the fuel cell module 2. The pump described above may be disposed outside the fuel cell module 2. The second reserve tank 82 stores or discharges the second coolant as necessary.

The second cooling system CS2 is provided for each of the fuel cell modules 2. To this end, in the present embodiment, four second reserve tanks 82 are disposed in the first section 11.

### [2-3. Second Section]

As described above, auxiliary machines relating to the operation of the fuel cell module 2 is disposed in the second section 12. The auxiliary machines include at least one of a switchboard, an air intake unit that takes air into the fuel cell module 2, and a heat exchanger through which a coolant that cools components included in the fuel cell module 2 flows.

As illustrated in FIG. 2, in the present embodiment, the auxiliary machines include an air intake unit 9, a heat exchanger 10, and a switchboard 20. That is, the fuel cell system 100 includes the air intake unit 9, the heat exchanger 10, and the switchboard 20. The housing 1 houses the air intake unit 9, the heat exchanger 10, and the switchboard 20.

Specifically, the air intake unit 9 takes in air to be supplied to the air electrode of the fuel cell stack 2a. In the present embodiment, the air intake unit 9 is disposed in the second section 12. That is, the air intake unit 9 is disposed in a section where hydrogen does not leak. Therefore, it is possible to prevent a situation where air containing hydrogen is taken in from the air intake unit 9. As a result, the air containing hydrogen can be prevented from being supplied to the air electrode of the fuel cell stack.

Specifically, in the second section 12, the same number of air intake units 9 as the plurality of fuel cell modules 2 disposed in the first section 11 are disposed. In the present embodiment, the number of fuel cell modules 2 is four, and the number of air intake units 9 is also four. In the present embodiment, the air intake unit 9 is not shared by the plurality of fuel cell modules 2, but the air intake unit 9 is provided for each fuel cell module 2. Therefore, when a malfunction occurs in any of the plurality of fuel cell modules 2, it is not necessary to stop all the fuel cell modules 2, and the fuel cell module 2 in which a malfunction does not occur can be continuously operated.

Specifically, the air intake unit 9 includes a filter. An air pipe 421 (indicated by a thick two-dot chain line in FIG. 2) through which air flows is connected to the air intake unit 9. The air pipe 421 is configured to include a pipe 42a provided in the adapter 133 (see FIG. 4A) and is disposed across the first section 11 and the second section 12. When the compressor included in the fuel cell module 2 operates, the air taken in from the air intake unit 9 is supplied to the air electrode of the fuel cell stack 2a included in the fuel cell module 2.

In the present embodiment, the heat exchanger 10 is disposed in the second section 12. The heat exchanger 10 having a large volume is disposed in the second section 12, and thus an increase in the volume of the first section 11 can be suppressed. By suppressing an increase in the volume of the first section 11, an increase in the size of the ventilation device 300 can be suppressed.

The heat exchanger 10 constitutes the cooling system CS provided for the fuel cell module 2. As described above, in the present embodiment, the cooling system CS includes the first cooling system CS and the second cooling system CS. To this end, in particular, the heat exchanger 10 includes a first heat exchanger 101 constituting the first cooling system CS1 and a second heat exchanger 102 constituting the second cooling system CS2. The first heat exchanger 101 and the second heat exchanger 102 are provided for each fuel cell module 2. That is, four first heat exchangers 101 and four second heat exchangers 102 are disposed in the second section 12.

The first heat exchanger 101 exchanges heat between the first coolant and a third coolant supplied from the outside of the housing 1.

The first coolant is sent from the fuel cell stack 2a to the first heat exchanger 101 and is returned from the first heat exchanger 101 to the fuel cell stack 2a by using a first coolant pipe 422 that connects the first heat exchanger 101 and a pump included in the fuel cell module 2. The first coolant pipe 422 is configured to include pipes 42b and 42c provided in the adapter 133 (see FIG. 4A) and is disposed across the first section 11 and the second section 12. The first coolant pipe 422 is indicated by a one-dot chain line in FIG. 2.

The third coolant is supplied from the outside of the housing 1 to the first heat exchanger 101 and discharged from the first heat exchanger 101 to the outside of the housing 1 by using a third coolant pipe 424 disposed in the second section 12. As illustrated in FIG. 1, the second section right wall 12d is provided with a connection port 121 for connecting the third coolant pipe 424 for supplying and discharging the third coolant with an external pipe. A device disposed outside the housing 1 is used to supply the third coolant to the third coolant pipe 424. The third coolant may be, but is not limited to, seawater. The third coolant pipe 424 is indicated by a thick one-dot chain line in FIG. 2.

The second heat exchanger 102 exchanges heat between the second coolant and the third coolant supplied from the outside of the housing 1. The equipment for supplying and discharging the third coolant is shared with the first heat exchanger 101.

The second coolant is sent from the power electronic device to the second heat exchanger 102 and is returned from the second heat exchanger 102 to the power electronic device by using a second coolant pipe 423 that connects the second heat exchanger 102 and a pump included in the fuel cell module 2. The second coolant pipe 423 is configured to include pipes 42d and 42e provided in the adapter 133 (see FIG. 4A) and is disposed across the first section 11 and the second section 12. The second coolant pipe 423 is indicated by a thin one-dot chain line in FIG. 2.

The third coolant is supplied from the outside of the housing 1 to the second heat exchanger 102 and discharged from the second heat exchanger 102 to the outside of the housing 1 by using the third coolant pipe 424 disposed in the second section 12.

In the present embodiment, the switchboard 20 is disposed in the second section 12. That is, the switchboard 20 is disposed in a section where hydrogen does not leak. Even if hydrogen leaks in the first section 11, the leaked hydrogen can be prevented from coming into contact with the switchboard 20. Specifically, the switchboard 20 is disposed at a right end portion of the second section 12. The second section right wall 12d is provided with an electric wire arrangement part 122 in which wires connected to the switchboard 20 are arranged. Specifically, the electric wire arrangement part 122 is a portion through which an electric wire is taken out from the inside of the housing 1 to the outside and an electric wire is inserted from the outside to the inside. Further, the electric wire arrangement part 122 may be a portion that connects an electric wire inside the housing 1 and an electric wire outside the housing 1. The electric wire arrangement part 122 may be configured by an opening through which an electric wire passes, a connector to which an electric wire is connected, or the like.

The switchboard 20 includes various terminals and relays. The various terminals include, for example, a terminal connected to a power line 411 (thick broken line in FIG. 2) through which electric power generated by the fuel cell module 2 flows. The power line 411 is included in the wires 41 (see FIG. 3) disposed across the first section 11 and the second section 12. Further, the various terminals include a terminal connected to a control line 412 (thin broken line in FIG. 2) that performs control with the fuel cell module 2. The control line 412 is included in the wires 41 (see FIG. 3) disposed across the first section 11 and the second section 12. In addition, the various terminals include terminals connected to sensor lines connected to sensors such as a pressure sensor and a temperature sensor. Further, the various terminals include a terminal connected to a communication line for communicating with an external control device.

The external control device is a control device that controls the fuel cell system 100. In the present embodiment, the control device is disposed outside the housing 1. However, the control device may be disposed in the switchboard 20. The control device disposed in the switchboard 20 may be remotely controlled from the outside.

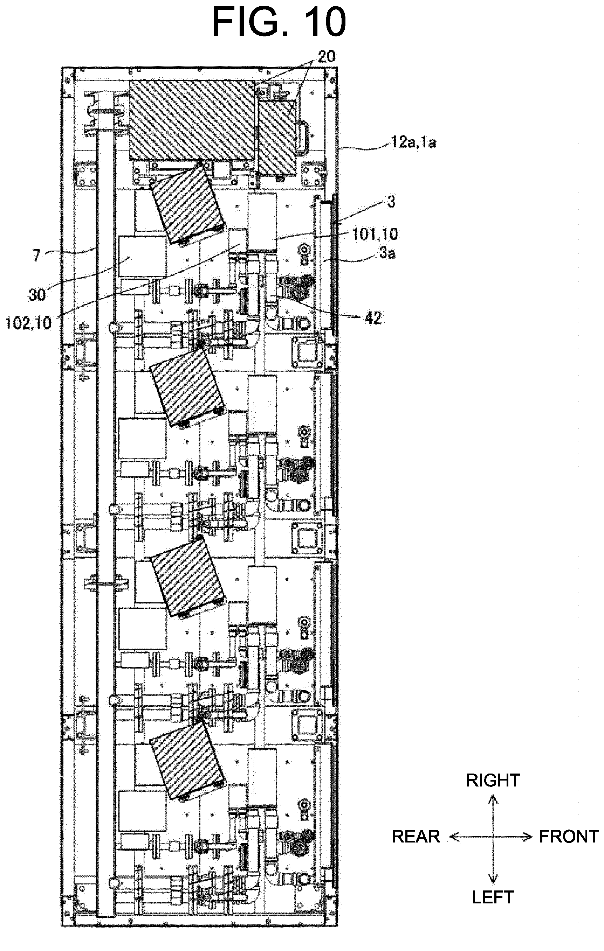

FIG. 10 is a schematic horizontal cross-sectional view of the fuel cell system 100 taken along line A-A illustrated in FIG. 1. As illustrated in FIG. 10, in the present embodiment, the desalination device 3 is installed on the second section front wall 12a. However, the desalination device 3 may be provided on a wall other than the partition wall 13 among the walls 12a to 12e and 13 constituting the second section 12.

The desalination device 3 comprises a desalination filter 3a. Specifically, the desalination filter 3a has a rectangular plate shape. As illustrated in FIG. 1, the second section front wall 12a is provided with a window part 123 that allows air to be taken into the second section 12 through the desalination filter 3a. Air is taken into the second section 12 through the window part 123 and the desalination filter 3a. Air from which salinity has been removed by the desalination filter 3a is taken into the second section 12.

Specifically, the fuel cell system 100 is provided with a plurality of desalination devices 3. The number of the desalination devices 3 may be one, but the load of each desalination device 3 can be reduced by arranging a plurality of desalination devices 3. As a result, the maintenance interval of the desalination device 3 can be prolonged, the replacement frequency of the desalination filter 3a can be reduced, and the pressure loss of the air passing through the desalination device 3 can be reduced. More specifically, four desalination devices 3 are arranged side by side in the left-right direction. Four window parts 123 provided in the second section front wall 12a are also arranged side by side in the left-right direction. As in the present embodiment, the plurality of desalination devices 3 are preferably disposed on the same side surface of the housing 1, but in some cases, the plurality of desalination devices 3 may be disposed on different side surfaces of the housing 1.

In the second section 12, at least one of an auxiliary machine relating to the operation of the fuel cell module 2 and a pipe is disposed between the desalination filter 3a and the air intake unit 9. As illustrated in FIG. 10, in the present embodiment, an auxiliary machine and the pipe 42 are disposed between the desalination filter 3a and the air intake unit 9. The auxiliary machine disposed between both the desalination filter 3a and the air intake unit 9 is a heat exchanger 10. Specifically, the auxiliary machine disposed between the desalination filter 3a and the air intake unit 9 is the box-shaped first heat exchanger 101 and the box-shaped second heat exchanger 102. As a preferred embodiment, when the housing 1 is viewed from the front (when viewed from the front-rear direction), the desalination filter 3a and the heat exchanger 10 are disposed at positions overlapping each other.

The auxiliary machine 10 and the pipe 42 are disposed between the desalination filter 3a and the air intake unit 9, and it is thereby possible to suppress the air that has passed through the desalination filter 3a from moving linearly toward the air intake unit 9. In this case, it is possible to suppress the passage of the air in the desalination filter 3a from being concentrated on a part, and thus it is possible to suppress the desalination filter 3a from being locally clogged. Further, the box-shaped heat exchanger 10 is disposed between the desalination filter 3a and the air intake unit 9, and it is thereby possible to enhance the effect of suppressing the air that has passed through the desalination filter 3a from moving linearly toward the air intake unit 9.

Further, as illustrated in FIG. 10, an electrical component 30 is disposed in the second section 12. The electrical component 30 is, for example, a relay. The electrical component 30 is disposed further rearward of the air intake unit 9 disposed rearward of the desalination device 3. The main flow of the air in the second section 12 is a flow from the desalination device 3 to the air intake unit 9. In the configuration in which the electrical component 30 is disposed further rearward of the air intake unit 9, the electrical component 30 is out of the mainstream of the air flow. Therefore, even when the salinity is not completely removed by the desalination device 3, it is possible to reduce the possibility of salt damage to the electrical component 30.

Even when the salinity is not sufficiently removed by the desalination device 3, air having a sufficiently reduced salinity is supplied to the fuel cell module 2 because the air intake unit 9 includes a filter.

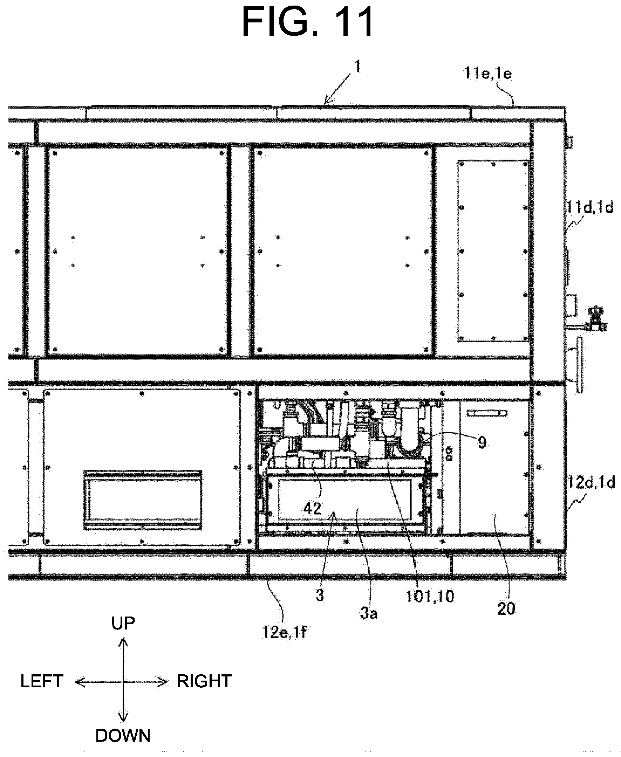

FIG. 11 is a front view illustrating a schematic configuration of a right end side of the second section 12. In FIG. 11, the right end portion of the second section 12 is exposed by removing a part of the front surface wall 1a of the housing 1 for convenience. As illustrated in FIGs. 10 and 11, in a front view from the front surface wall 1a (first outer surface wall) of the housing 1, the switchboard 20 offset to one side in the left-right direction with respect to the desalination device 3 and the air intake unit 9 is disposed in the second section 12. Specifically, the switchboard 20 is offset to the right with respect to the desalination device 3 and the air intake unit 9. More specifically, the switchboard 20 is offset to the right with respect to the rightmost one of the four desalination devices 3 and the rightmost one of the four air intake units 9.

With such a configuration, the switchboard 20 can be disposed at a position away from the flow of air from the desalination device 3 toward the air intake unit 9. Therefore, it is possible to reduce the possibility that the switchboard 20 is damaged by salt due to a small amount of salt that has not been removed by the desalination device 3.

### [2-4. Others]

As can be seen from the above, the housing 1 has a first outer surface wall (the front surface wall 1a in a detailed example) on which the desalination device 3 located upstream of the air intake unit 9 in the flow of air is disposed (see, for example, FIG. 1). In addition, the housing 1 has a second outer surface wall (the right surface wall 1d in a detailed example) provided with the electric wire arrangement part 122 in which wires are arranged. The electric wire taken out from the electric wire arrangement part 122 to the outside of the housing 1 is connected to an external control device or an external power using component.

In the periphery of the housing 1, the flow rate of the air passing through the periphery of the desalination device 3 is likely to be larger than the flow rate of the air passing through outside the periphery of the desalination device 3, although depending on the installation location. For this reason, the progress of salt damage tends to be faster in the periphery of the desalination device 3 than outside the periphery of the desalination device 3. In the present embodiment, the electric wire arrangement part 122 is provided on an outer surface wall (right surface wall 1d) of the housing 1 different from the outer surface wall (front surface wall 1a) on which the desalination device 3 is provided. For this reason, the electric wire arrangement part 122 is positioned in a portion where the flow of air around the housing is small. As a result, the electric wire taken out from the electric wire arrangement part 122 to the outside of the housing 1 can be arranged at a position where the salt concentration is relatively low, and the possibility that the electric wire is damaged by salt can be reduced.

In the present embodiment, the second outer surface wall (right surface wall 1d) of the housing 1 is provided with the connection part 6 that connects the hydrogen flow passage 5 and the external hydrogen flow passage 200 disposed outside the housing 1. That is, in the present embodiment, external pipes and external wires connected to the fuel cell system 100 can be collected on one outer surface wall of the housing 1.

Specifically, on the second outer surface wall (right surface wall 1d) of the housing 1, the electric wire arrangement part 122 is disposed below the connection part 6. As a result, the connection part 6 and the electric wire arrangement part 122 can be provided on walls constituting different sections. Specifically, the connection part 6 may be provided on a wall constituting the first section 11 of the second outer surface wall, and the electric wire arrangement part 122 may be provided on a wall constituting the second section 12 of the second outer surface wall. As a result, it is possible to form the fuel cell system 100 in which measures against hydrogen leakage are appropriately taken, without complicating the structure.

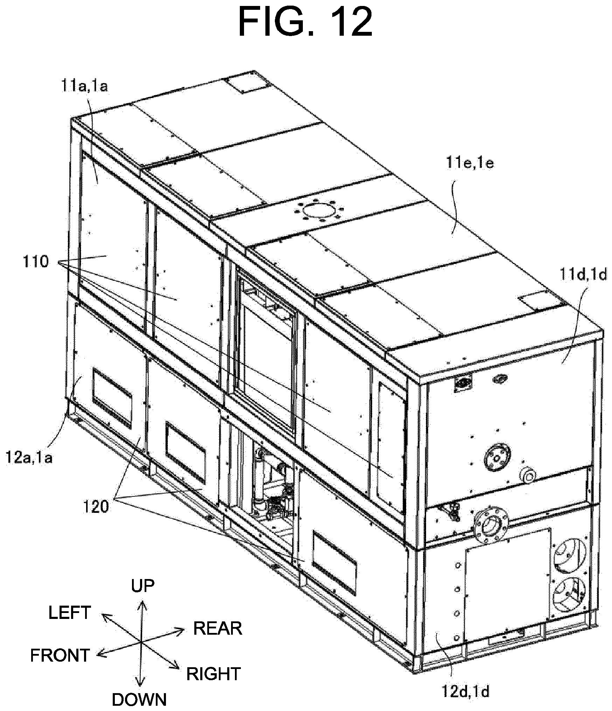

In the present embodiment, the first outer surface wall (front surface wall 1a) on which the desalination device 3 is disposed has a detachable wall which is detachable. FIG. 12 is a view illustrating a state where a part of a detachable wall is detached from the fuel cell system 100 illustrated in FIG. 1. As illustrated in FIG. 12, the detachable wall includes a first section detachable wall 110 and a second section detachable wall 120.

The second section detachable wall 120 is a wall constituting the second section 12. That is, the first outer surface wall (front surface wall 1a) is a wall constituting the second section 12, and is configured to include the second section detachable wall 120 which is detachable. In the configuration of the present embodiment in which the first outer surface wall is the front surface wall 1a, the second section detachable wall 120 may be the second section front wall 12a itself, or may be a part of the second section front wall 12a. In the present embodiment, the second section detachable wall 120 is a part of the second section front wall 12a.

Specifically, the second section front wall 12a includes a plurality of second section detachable walls 120. More specifically, the second section front wall 12a includes four second section detachable walls 120. The plurality of second section detachable walls 120 are arranged in the left-right direction. In the example illustrated in FIG. 12, the second section detachable wall 120 which is the third from left to right is detached. The second section detachable wall 120 is detachably attached to the housing 1 by using, for example, a screw, but may be attached to the housing 1 by other detachable means.

In the present embodiment, the desalination device 3 is attached to the second section detachable wall 120. The second section detachable wall 120 is provided with the window part 123 that allows air to be taken into the second section 12 through the desalination filter 3a. The desalination device 3 is attached to the second section detachable wall 120, and thus the desalination device 3 can be taken out from the second section 12 by detaching the second section detachable wall 120. That is, the maintenance of the desalination device 3 can be facilitated.

The first section detachable wall 110 is a wall constituting the first section 11. That is, the first outer surface wall (front surface wall 1a) is a wall constituting the first section 11, and is configured to include the first section detachable wall 110 which is detachable. In the configuration of the present embodiment in which the first outer surface wall is the front surface wall 1a, the first section detachable wall 110 may be the first section front wall 11a itself, or may be a part of the first section front wall 11a. In the present embodiment, the first section detachable wall 110 is a part of the first section front wall 11a.

Specifically, the first section front wall 11a includes a plurality of first section detachable walls 110. More specifically, the first section front wall 11a includes five first section detachable walls 110. The plurality of first section detachable walls 110 are arranged in the left-right direction. In the example illustrated in FIG. 12, the first section detachable wall 110 which is the third from left to right is detached. The first section detachable wall 110 is detachably attached to the housing 1 by using, for example, a screw, but may be attached to the housing 1 by other detachable means. Further, the first section detachable wall 110 is sealed in a state of being attached to the housing 1 in such a manner that the hydrogen gas does not leak from the first section 11.

By providing the first section detachable wall 110, it is possible to facilitate maintenance in the first section 11. Further, since the first section detachable wall 110 is provided separately from the second section detachable wall 120, only the first section 11 can be inspected separately from the second section 12. If the first section 11 needs to be inspected during the operation of the fuel cell system 100, the inspection can be performed by detaching only the first section detachable wall 110 without detaching the second section detachable wall 120. Therefore, it is possible to prevent the air containing salt from being supplied from the air intake unit 9 to the fuel cell module 2.

### < 3. Installation Section of Fuel Cell System >

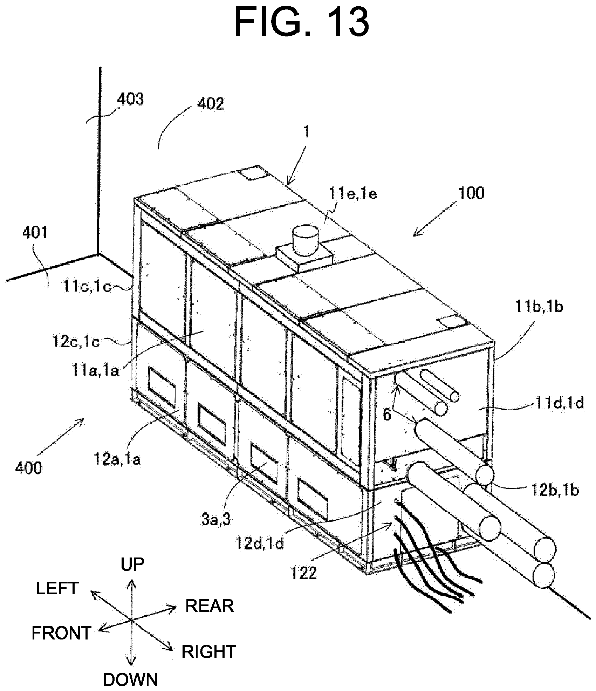

Next, an installation section of the fuel cell system 100 having the housing 1 in which the fuel cell module 2 and the desalination device 3 are disposed will be described. FIG. 13 is a perspective view illustrating a schematic configuration of a fuel cell system installation section 400 according to the embodiment of the present invention. As illustrated in FIG. 13, the fuel cell system installation section 400 includes a floor surface 401 and a vertical wall 402.

The housing 1 is disposed on the floor surface 401. In particular, the floor surface 401 is horizontal. The housing 1 is disposed in the fuel cell system installation section 400 with the bottom surface wall 1f facing the floor surface 401. The vertical wall 402 extends upward from the floor surface 401. In the present embodiment, the floor surface 401 and the vertical wall 402 are orthogonal to each other.

The housing 1 includes the first outer surface wall, the second outer second outer surface wall, and a third outer surface wall. In the present embodiment, the first outer surface wall is the front surface wall 1a on which the desalination device 3 is disposed. The second outer surface wall is the right surface wall 1d provided with the electric wire arrangement part 122 in which a wire is arranged. The third outer surface wall is the rear surface wall 1b facing the front surface wall 1a which is the first outer surface wall.

The rear surface wall 1b, which is the third outer surface wall, is disposed along the vertical wall 402. Specifically, the rear surface wall 1b is parallel to the vertical wall 402 and faces the vertical wall 402. The rear surface wall 1b is disposed close to the vertical wall 402. Further, the right surface wall 1d, which is the second outer second outer surface wall, is disposed in a direction orthogonal to the floor surface 401 and the vertical wall 402.

With such a configuration, in the housing 1, the wall (front surface wall 1a) on which the desalination device 3 is disposed is disposed on the side opposite to the side on which the vertical wall 402 is present. Therefore, the air can be appropriately supplied to the air intake unit 9 without being obstructed by the wall. Further, since the electric wire arrangement part 122 is disposed on a surface different from the surface on which the desalination device 3 is disposed, it is possible to make the electric wires less susceptible to salt damage.

The second outer surface wall on which the electric wire arrangement part 122 is provided may be the left surface wall 1c of the housing 1. In this case, an external pipe for supplying and exhausting the hydrogen, an external pipe for exhausting the water-containing gas generated in the fuel cell module 2, and an external pipe for supplying the coolant may be disposed on the left surface wall 1c side. In this case, the disposition of the valve device 53 and the switchboard 20 disposed in the housing 1 may be changed from the right end portion to the left end portion, and the configuration of the pipes and wires in the housing 1 may be appropriately changed in accordance with this.

Further, in the configuration illustrated in FIG. 13, the left surface wall 1c of the housing 1 may extend upward from the floor surface 401, and may be disposed close to another vertical wall 403 that forms a corner together with the vertical wall 402.

### < 4. Notes >

The various technical features disclosed in the present specification can be modified in various ways without departing from the gist of the technical creation thereof. In addition, the multiple embodiments and variations described in the present specification may be combined to the extent possible.

### < 5. Supplementary Notes >

An exemplary fuel cell system of the present invention may have a configuration (first configuration) which includes a fuel cell module, an air intake unit that takes air into the fuel cell module, and a housing that houses the fuel cell module and the air intake unit, and in which the housing has a first outer surface wall on which a desalination device is disposed upstream of the air intake unit, and a second outer surface wall provided with an electric wire arrangement part on which an electric wire is arranged.

The fuel cell system having the above first configuration may have a configuration (second configuration) which includes a hydrogen flow passage disposed in the housing, and in which the second outer surface wall is provided with a connection part that connects the hydrogen flow passage and an external hydrogen flow passage disposed outside the housing.

The fuel cell system having the above second configuration may have a configuration (third configuration) in which the electric wire arrangement part is arranged below the connection part on the second outer surface wall.

In the fuel cell system having the above third configuration, a configuration (fourth configuration) may be employed in which the housing includes a first section in which the fuel cell module is disposed and a second section which is adjacent to the first section and in which the air intake unit is disposed, the connection part is provided in the first section, and the electric wire arrangement part is provided in the second section.

In the fuel cell system having any one of the above first to fourth configurations, a configuration (fifth configuration) may be employed in which the housing includes a first section in which the fuel cell module is disposed and a second section which is adjacent to the first section and in which the air intake unit is disposed, the first outer surface wall includes a second section detachable wall which is a wall constituting the second section and is detachable, and the desalination device is disposed in the second section detachable wall.

In the fuel cell system having the above fifth configuration, a configuration (sixth configuration) may be employed in which the first outer surface wall includes a first section detachable wall which is a wall constituting the first section and is detachable.

In the fuel cell system having the above fifth or sixth configuration, a configuration (seventh configuration) may be employed in which an electrical component is disposed in the second section, and the electrical component is disposed further rearward of the air intake unit disposed rearward of the desalination device.

In the fuel cell system having any one of the above fifth to seventh configurations, a configuration (eighth configuration) may be employed in which the desalination device includes a desalination filter, and at least one of an auxiliary machine relating to an operation of the fuel cell module and a pipe is disposed between the desalination filter and the air intake unit in the second section.

In the fuel cell system having the above eighth configuration, a configuration (ninth configuration) may be employed in which the auxiliary machine is a heat exchanger.

In the fuel cell system having any one of the above fifth to ninth configurations, a configuration (tenth configuration) may be employed in which, in a front view from the first outer surface wall side, a switchboard offset to one side in a left-right direction with respect to the desalination device and the air intake unit is disposed in the second section.

In the fuel cell system having any one of the above first to tenth configurations, a configuration (eleventh configuration) may be employed in which a plurality of the desalination devices are disposed.

An exemplary fuel cell system installation section of the present invention is a fuel cell system installation section for a fuel cell system having a housing in which a fuel cell module and a desalination device are disposed, and may have a configuration (twelfth configuration) which includes a floor surface on which the housing is disposed, and a vertical wall extending upward from the floor surface, and in which the housing includes a first outer surface wall on which the desalination device is disposed, a second outer surface wall provided with an electric wire arrangement part in which an electric wire is arranged, and a third outer surface wall facing the first outer surface wall, and in which the third outer surface wall is disposed along the vertical wall, and the second outer surface wall is disposed in a direction orthogonal to the floor surface and the vertical wall.

### REFERENCE SIGNS LIST

- 1: ... housing
- 1a: ... front surface wall (first outer surface wall)
- 1b: ... rear surface wall (third outer surface wall)
- 1d: ... right surface wall (second outer surface wall)
- 2: ... fuel cell module
- 3: ... desalination device
- 3a: ... desalination filter
- 5: ... hydrogen flow passage
- 6: ... connection part
- 9: ... air intake unit
- 10: ... heat exchanger
- 11: ... first section
- 11a: ... first section front wall
- 11b: ... first section rear wall
- 11c: ... first section left wall
- 11d: ... first section right wall
- 11e: ... first section upper wall
- 12: ... second section
- 12a: ... second section front wall
- 12b: ... second section rear wall
- 12c: ... second section left wall
- 12d: ... second section right wall
- 12e: ... second section upper wall
- 13: ... partition wall
- 20: ... switchboard
- 30: ... electrical component
- 100: ... fuel cell system
- 110: ... first section detachable part
- 120: ... second section detachable part
- 122: ... electric wire arrangement part
- 132: ... seal structure
- 132A: ... seal structure
- 200: ... external hydrogen flow passage
- 400: ... fuel cell system installation section
- 401: ... floor surface
- 402: ... vertical wall

## Claims

1. A fuel cell system comprising:
a fuel cell module;
an air intake unit that takes air into the fuel cell module; and
a housing that houses the fuel cell module and the air intake unit,
wherein the housing has a first outer surface wall on which a desalination device is disposed upstream of the air intake unit, and a second outer surface wall provided with an electric wire arrangement part on which an electric wire is arranged.

2. The fuel cell system according to claim 1, further comprising a hydrogen flow passage disposed in the housing, wherein the second outer surface wall is provided with a connection part that connects the hydrogen flow passage and an external hydrogen flow passage disposed outside the housing.

3. The fuel cell system according to claim 2, wherein the electric wire arrangement part is arranged below the connection part on the second outer surface wall.

4. The fuel cell system according to claim 3, wherein the housing includes a first section in which the fuel cell module is disposed and a second section which is adjacent to the first section and in which the air intake unit is disposed, the connection part is provided in the first section, and the electric wire arrangement part is provided in the second section.

5. The fuel cell system according to claim 1, wherein the housing includes a first section in which the fuel cell module is disposed and a second section which is adjacent to the first section and in which the air intake unit is disposed, the first outer surface wall includes a second section detachable wall which is a wall constituting the second section and is detachable, and the desalination device is disposed in the second section detachable wall.

6. The fuel cell system according to claim 5, wherein the first outer surface wall includes a first section detachable wall which is a wall constituting the first section and is detachable.

7. The fuel cell system according to claim 5, wherein an electrical component is disposed in the second section, and the electrical component is disposed further rearward of the air intake unit disposed rearward of the desalination device.

8. The fuel cell system according to claim 5, wherein the desalination device includes a desalination filter, and at least one of an auxiliary machine relating to an operation of the fuel cell module and a pipe is disposed between the desalination filter and the air intake unit in the second section.

9. The fuel cell system according to claim 8, wherein the auxiliary machine is a heat exchanger.

10. The fuel cell system according to claim 5, wherein, in a front view from the first outer surface wall side, a switchboard offset to one side in a left-right direction with respect to the desalination device and the air intake unit is disposed in the second section.

11. The fuel cell system according to any one of claims 1 to 10, wherein a plurality of the desalination devices are disposed.

12. A fuel cell system installation section for a fuel cell system having a housing in which a fuel cell module and a desalination device are disposed, the fuel cell system installation section comprising:
a floor surface on which the housing is disposed; and
a vertical wall extending upward from the floor surface,
wherein the housing includes a first outer surface wall on which the desalination device is disposed, a second outer surface wall provided with an electric wire arrangement part in which an electric wire is arranged, and a third outer surface wall facing the first outer surface wall, and the third outer surface wall is disposed along the vertical wall, and the second outer surface wall is disposed in a direction orthogonal to the floor surface and the vertical wall.
